# EUROPÄISCHE PATENTANMELDUNG

(11) **EP 0 928 894 A2**
(43) Veröffentlichungstag der Anmeldung: **14.07.1999**
(21) Anmeldenummer: 98119957.3
(22) Anmeldetag: 22.10.1998
(51) Int. Cl.: F04B 1/04, B60T 8/40

(54) **Kunststoffkolben für eine Kolbenpumpe in einer Fahrzeugbremsanlage**

(30) Priorität: 09.01.1998 DE 19800500
(71) Anmelder: ROBERT BOSCH GMBH, 70442 Stuttgart (DE)
(72) Erfinder: Schuller, Wolfgang, 74343 Sachsenheim (DE)

(57) **Zusammenfassung**

Die Erfindung betrifft eine Kolbenpumpe mit einem Kolben (18), der in einer in ein Pumpengehäuse (10) eingesetzten Laufbuchse (14) axial verschieblich geführt und mittels eines rotierend antreibbaren Exzenters (22) zu einer hin- und hergehenden Hubbewegung antreibbar ist. Die Erfindung schlägt die Verwendung einer als Kunststoff-Spritzgießteil gefertigten Laufbuchse (14) vor. Die Laufbuchse (14) aus Kunststoff hat Vorteile hinsichtlich Herstellung, Dämpfungsverhalten bei Druckänderungen und Geräuschbildung. In Weiterbildung schlägt die Erfindung vor, ein Filter (42, 44, 46) einstückig beim Spritzgießen der Laufbuchse (14) an dieser anzubringen.

## Beschreibung

### Stand der Technik

Die Erfindung betrifft eine Kolbenpumpe nach der Gattung des Hauptanspruchs, die insbesondere zur Verwendung in einer hydraulischen Fahrzeugbremsanlage vorgesehen ist.

Derartige Kolbenpumpen sind an sich bekannt. Sie weisen einen beispielsweise zylindrischen Kolben auf, der in einer Laufbuchse axial verschieblich geführt ist. Die Laufbuchse kann einstückig mit einem Laufbuchsenboden an ihrem einen Stirnende sein. Die Laufbuchse bekannter Kolbenpumpen besteht aus Stahl, sie ist spanend oder auch durch Umformen, beispielsweise durch Kaltschlagen, hergestellt. Die Laufbuchse ist in ein Pumpengehäuse eingesetzt. Zum Antrieb des Kolbens zu einer hin- und hergehenden Hubbewegung kann beispielsweise ein Exzenterantrieb vorgesehen sein. Auch ist es möglich, den Kolben ohne Laufbuchse in einem Pumpengehäuse axial verschieblich zu führen. In diesem Fall besteht das Pumpengehäuse aus Stahl. Bei Verwendung einer Laufbuchse ist das Pumpengehäuse vielfach aus Aluminium-Druckguß hergestellt.

### Vorteile der Erfindung

Die erfindungsgemäße Kolbenpumpe mit den Merkmalen des Hauptanspruchs weist eine Laufbuchse oder, sofern der Kolben unmittelbar im Pumpengehäuse geführt ist, ein Pumpengehäuse aus Kunststoff auf. Ist eine Laufbuchse vorhanden, so kann das Pumpengehäuse ebenfalls aus Kunststoff oder beispielsweise auch aus Aluminium-Druckguß oder aus Stahl bestehen. Eine aus Kunststoff hergestellte Laufbuchse bzw. ein aus Kunststoff hergestelltes Pumpengehäuse, also die Herstellung des den Kolben axial führenden Teils der Kolbenpumpe aus Kunststoff, ergibt einen erheblichen Kostenvorteil gegenüber der Herstellung dieses Teils aus Stahl. Weiterer Vorteil ist der Entfall von Arbeitsgängen, die bei einem den Kolben führenden Teil aus Stahl notwendig sind, wie beispielsweise spanende und/oder umformende Oberflächenbearbeitung einer den Kolben führenden Lauffläche des den Kolben führenden Teils, die Anbringung von Hinterschneidungen, Einstichen oder Durchbrüchen. Hinzu kommen gute Gleiteigenschatten des Kunststoffs mit geringer Reibung und geringem Verschleiß, sowie ein gegenüber Stahl verbessertes elastisches Verhalten der Laufbuchse. Das verbesserte elastische Verhalten hat den Vorteil, daß beispielsweise ein als Rückschlagventil ausgebildetes Ein- oder Auslaßventil der Kolbenpumpe, dessen Ventilsitz sich an einem Laufbuchsenboden befindet, besser abdichtet und schneller schließt. Des weiteren wird ein Aufschlagen eines Ventilschließkörpers auf den Ventilsitz beim Schließen eines solchen Ventils gedämpft, was Geräuschbildung und Verschleiß verringert. Zudem dämpft die Laufbuchse bzw. das Pumpengehäuse aus Kunststoff durch ihr/sein elastisches Verhalten Druckschwingungen, Druckpulsationen und Druckspitzen, die durch die diskontinuierliche Förderweise der Kolbenpumpe verursacht werden. Weiterer Vorteil der Fertigung des den Kolben führenden Teils aus Kunststoff ist die Möglichkeit, nahezu jede gewünschte Geometrie zu verwirklichen. Dadurch lassen sich Stellen des den Kolben führenden Teils, die bei der Fluidförderung mittels der Kolbenpumpe mit strömendem Fluid beaufschlagt werden, also beispielsweise ein Zu- und ein Abströmbereich, strömungstechnisch auf geringe Geräuschbildung und geringen Strömungswiderstand hin gestalten.

Die Unteransprüche haben vorteilhafte Ausgestaltungen und Weiterbildungen der im Hauptanspruch angegebenen Erfindung zum Gegenstand.

Gemäß Anspruch 5 ist die Laufbuchse einstückig mit einem Filter. Dies hat den Vorteil, daß kein separates Filter benötigt wird, was sowohl Herstellungskosten als auch Montageaufwand einspart. Weiterer Vorteil ist, daß sich eine Filterfläche bei gleicher Länge der Laufbuchse durch die einstückige Ausbildung größer ausbilden läßt als bei einer Laufbuchse mit angesetztem Filter.

Bei einer Ausgestaltung der Erfindung gemäß Anspruch 7 weist die Laufbuchse ein Ventilsitzteil auf, so daß sich der Ventilsitz auf einfache Weise verscheißfest ausbilden läßt. Das Ventilsitzteil kann beispielsweise durch Umspritzen mit dem die Laufbuchse bildenden Kunststoff einstückig mit der Laufbuchse sein (Anspruch 8).

Bei einer Ausgestaltung der Erfindung gemäß Anspruch 9 weist die Laufbuchse einen verkleinerten Durchmesser in einem axial begrenzten Bereich auf, der zusammen mit einer Pumpenbohrung des Pumpengehauses, in die die Laufbuchse eingesetzt ist, einen die Laufbuchse umgebenden Ringkanal bildet. Durch diesen Ringkanal erfolgt eine Zu- oder Abströmung der erfindungsgemäßen Kolbenpumpe. Der Ringkanal hat den Vorteil, daß er eine Zu- oder Abströmung der Kolbenpumpe unabhängig von einer Winkellage, in der die Laufbuchse in das Pumpengehäuse eingesetzt ist, sicherstellt, es muß also beim Einbau der Laufbuchse in das Pumpengehäuse keine Winkelausrichtung beachtet werden. Den Ringkanal durch eine Durchmesserverjüngung der Laufbuchse auszubilden hat den Vorteil, daß keine Durchmessererweiterung der Pumpenbohrung im Pumpengehäuse beispielsweise durch Drehen ausgebildet werden muß, was einen erheblichen Herstellungsaufwand verursachen würde.

Die erfindungsgemäße Kolbenpumpe ist insbesondere als Pumpe in einer Bremsanlage eines Fahrzeugs vorgesehen und wird beim Steuern des Drucks in Radbremszylindern verwendet. Je nach Art der Bremsanlage werden für derartige Bremsanlagen die Kurzbezeichnungen ABS bzw. ASR bzw. FDR bzw. EHB verwendet. In der Bremsanlage dient die Pumpe beispielsweise zum Rückfördern von Bremsflüssigkeit aus einem Radbremszylinder oder aus mehreren Radbremszylindern in einen Hauptbremszylinder (ABS) und/oder zum Fördern von Bremsflüssigkeit aus einem Vorratsbehälter in einen Radbremszylinder oder in mehrere Radbremszylinder (ASR bzw. FDR bzw. EHB). Die Pumpe wird beispielsweise bei einer Bremsanlage mit einer Radschlupfregelung (ABS bzw. ASR) und/oder bei einer als Lenkhilfe dienenden Bremsanlage (FDR) und/oder bei einer elektrohydraulischen Bremsanlage (EHB) benötigt. Mit der Radschlupfregelung (ABS bzw. ASR) kann beispielsweise ein Blockieren der Räder des Fahrzeugs während eines Bremsvorgangs bei starkem Druck auf das Bremspedal (ABS) und/oder ein Durchdrehen der angetriebenen Räder des Fahrzeugs bei starkem Druck auf das Gaspedal (ASR) verhindert werden. Bei einer als Lenkhilfe (FDR) dienenden Bremsanlage wird unabhängig von einer Betätigung des Bremspedals bzw. Gaspedals ein Bremsdruck in einem oder in mehreren Radbremszylindern aufgebaut, um beispielsweise ein Ausbrechen des Fahrzeugs aus der vom Fahrer gewünschten Spur zu verhindern. Die Pumpe kann auch bei einer elektrohydraulischen Bremsanlage (EHB) verwendet werden, bei der die Pumpe die Bremsflüssigkeit in den Radbremszylinder bzw. in die Radbremszylinder fördert, wenn ein elektrischer Bremspedalsensor eine Betätigung des Bremspedals erfaßt oder bei der die Pumpe zum Füllen eines Speichers der Bremsanlage dient.

### Zeichnung

Die Erfindung wird nachfolgend anhand eines in der Zeichnung dargestellten Ausführungsbeispiels näher erläutert. Es zeigen:
- Figur 1: einen Achsschnitt einer erfindungsgemäßen Kolbenpumpe; und
- Figur 2: einen Achsschnitt einer Vormontagebaugruppe der Kolbenpumpe aus Figur 1.

### Beschreibung des Ausführungsbeispiels

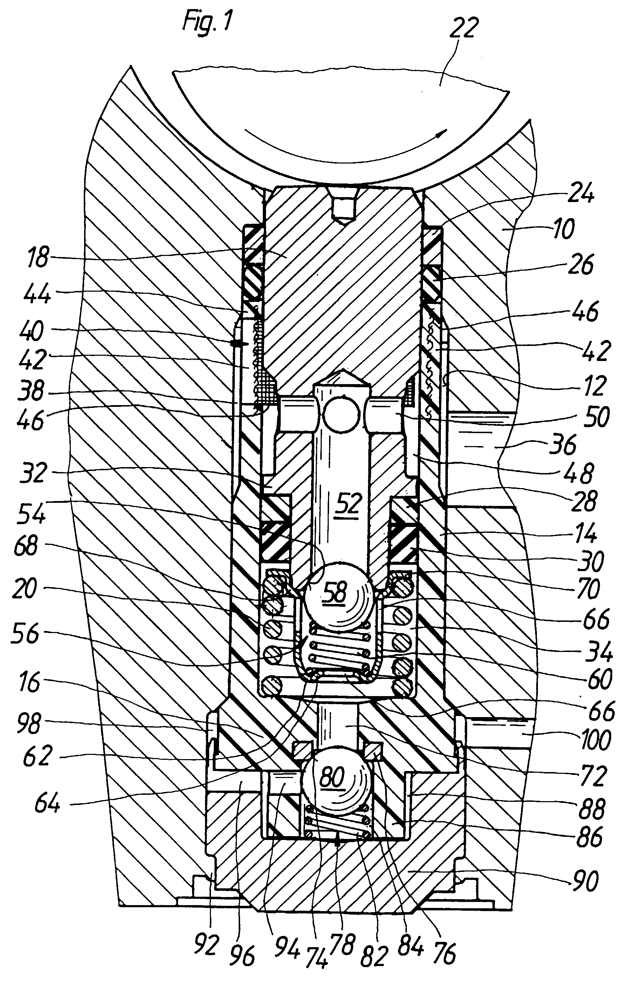

Die in Figur 1 dargestellte, erfindungsgemäße Kolbenpumpe ist in einen Hydraulikblock 10 eingesetzt, von dem in der Zeichnung der übersichtlichen Darstellung wegen nur ein die Kolbenpumpe umgebendes Bruchstück dargestellt ist. Der Hydraulikblock 10 ist Teil einer im übrigen nicht dargestellten, hydraulischen, schlupfgeregelten Fahrzeugbremsanlage. In den Hydraulikblock 10 sind weitere hydraulische Bauelemente, wie Magnetventile, der Fahrzeugbremsanlage eingesetzt und hydraulisch miteinander und mit der Kolbenpumpe verschaltet. Der Hydraulikblock 10 ist hydraulisch an einen nicht dargestellten Hauptbremszylinder angeschlossen, an den Hydraulikblock 10 sind nicht dargestellte Radbremszylinder hydraulisch angeschlossen. Der Hydraulikblock 10 bildet ein Pumpengehäuse der Kolbenpumpe und wird nachfolgend als solches bezeichnet.

Das Pumpengehäuse 10 besteht aus Metall, vorzugsweise aus Aluminium-Durckguß. Im Pumpengehäuse 10 ist eine durchgehende, gestufte Pumpenbohrung 12 angebracht, in die eine Laufbuchse 14 eingesetzt ist. Die Laufbuchse 14 ist ein hohlzylindrisches Kunststoff-Spritzgußteil mit einem mit ihr einstückigen Laufbuchsenboden 16 an ihrem einen Ende. Durch den Zusatz von Teflon werden gute Gleiteigenschaften der Laufbuchse 14 erzielt bzw. es werden die Gleiteigenschatten des Kunststoffs, aus dem die Laufbuchse 14 besteht, verbessert. Der die Laufbuchse 14 bildende Kunststoff weist Kohlefasern auf, die die Stabilität der Laufbuchse 14 vergrößern und ein Verschleißverhalten der Laufbuchse 14 verbessern. In der Laufbuchse 14 ist ein im wesentlichen zylindrischer Kolben 18 axial verschieblich geführt. Der Kolben 18 wird von einer Kolbenrückstellfeder 20, die in die Laufbuchse 14 eingesetzt ist und sich am Laufbuchsenboden 16 abstützt, vom Laufbuchsenboden 16 weg in Richtung aus der Laufbuchse 14 heraus gedrückt. Auf einer dem Laufbuchsenboden 16 abgewandten Seite des Kolbens 18 ist ein elektromotorisch rotierend antreibbarer Exzenter 22 angeordnet, gegen dessen Umfang die Kolbenrückstellfeder 20 den Kolben 18 drückt. Durch rotierenden Antrieb des Exzenters 22 wird der Kolben 18 zu einer hin- und hergehenden Hubbewegung in der Laufbuchse 14 angetrieben.

Ein dem Exzenter 22 zugewandtes Ende des Kolbens 18 ist mit einem Führungsring 24 axial verschieblich im Pumpengehäuse 10 geführt, ein dem Führungsring 24 axial benachbarter Dichtring 26 dichtet zwischen dem Kolben 18 und dem Pumpengehäuse 10 ab. Führungsring 24 und Dichtring 26 sind in Verlängerung der Laufbuchse 14 in die Pumpenbohrung 12 eingesetzt.

Ein dem Exzenter 22 abgewandtes, in der Laufbuchse 14 befindliches Ende des Kolbens 18 ist mit einem Führungsring 28 axial verschieblich in der Laufbuchse 14 geführt, ein Dichtring 30 dichtet ab zwischen dem Kolben 18 und der Laufbuchse 14. Der Kolben 18 verjüngt sich an einer Ringstufe 32 in Richtung des Laufbuchsenbodens 16. Die Ringstufe 32 dient der axialen Anlage des Führungsrings 28 und des Dichtrings 30, die auf das verjüngte Ende des Kolbens 18 aufgeschoben sind.

Der Kolben 18 mit dem auf ihn aufgeschobenen Dichtring 30 schließt eine Verdrängungskammer 34 zwischen seinem dem Laufbuchsenboden 18 zugewandten Ende und dem Laufbuchsenboden 16 in der Laufbuchse 14 ein. Durch eine hin- und hergehende Hubbewegung des Kolbens 18 wird ein Volumen des Verdrängungsraum 34 vergrößert und verkleinert und dadurch in von Kolbenpumpen an sich bekannter Weise Fluid gefördert.

Zum Einlaß von zu förderndem Fluid in die Kolbenpumpe ist eine Einlaßbohrung 36 radial zur Pumpenbohrung 12 im Pumpengehäuse 10 angebracht, die in die Pumpenbohrung 12 mündet. Die Einlaßbohrung 36 mündet in einen die Laufbuchse 14 umgebenden Ringkanal, der zwischen einem Außenumfang der Laufbuchse 14 und dem Pumpengehäuse 10 eingeschlossen ist und der Teil des Pumpeneinlasses ist. Der Ringkanal 38 erstreckt sich in axialer Richtung von der Einlaßbohrung 36 bis nahe an das offene, dem Exzenter 22 zugewandte Ende der Laufbuchse 14. Der Ringkanal 38 ist gebildet durch eine Durchmesserverjüngung der Laufbuchse 14 in Richtung vom Laubuchsenboden 16 zum Exzenter 22 und durch eine Verjüngung der Pumpenbohrung 12 nahe dem offenen Ende der Laufbuchse 14. der Ringkanal 38 befindet sich in axialer Richtung gesehen außerhalb des Verdrängungsraums 34 der Kolbenpumpe. Im Bereich des Verdrängungsraums 34 liegt die Laufbuchse 14 vollflächig am Pumpengehäuse 10 an, so daß die Laufbuchse 14 im Bereich des Verdrängungsraums 34, in dem beim Betrieb der Kolbenpumpe hoher Druck entstehen kann, vollflächig vom Pumpengehäuse 10 abgestützt ist.

An ihrem offenen Ende ist die Laufbuchse 14 mit Filterfenstern 40 in Form von ihre Wandung durchsetzenden Öffnungen versehen, die durch in Längsrichtung der Laufbuchse 14 verlaufende Filterstege 42 in Umfangsrichtung voneinander getrennt und von einem Abschlußring 44 in axialer Richtung begrenzt sind. Die Filterstege 42 und der Abschlußring 44 sind einstückig mit der Laufbuchse 14 durch Spritzgießen hergestellt. Im Bereich der Filterfenster 40 ist ein schlauchförmiges Filtergewebe 46 durch Umspritzen mit dem die Laufbuchse 14 bildenden Kunststoff bei der Herstellung der Laufbuchse 14 unlösbar mit der Laufbuchse 14 verbunden. Das Filtergewebe 46 bzw. ein das Filtergewebe 46, die Filterstege 42 und den Abschlußring 44 umfassendes Filter ist somit einstückig mit der Laufbuchse 14. Das Filtergewebe 46 deckt die Filterfenster 40 vollständig ab, so daß kein zu förderndes Fluid ungefiltert in die Kolbenpumpe einströmen kann. Die Filterfenster 40 befinden sich im Bereich des zwischen der Laufbuchse 14 und dem Pumpengehäuse 10 eingeschlossenen Ringkanals 38. Die Filterstege 42 und der Abschlußring 44 sind bündig mit einem Innenumfang der Laufbuchse 14, so daß die Filterstege 42 und der Abschlußring 44 ebenso wie die Laufbuchse 14 über ihre übrige Länge in der Lage sind, den Kolben 18 axial verschieblich zu führen.

Von den Filtertenstern 40 erfolgt der Fluideinlaß der Kolbenpumpe weiter durch eine umlaufende Nut 48 im Kolben 18 in Qinerbohrungen 50, die einander kreuzend im Bereich der Nut 48 im Kolben 18 angebracht sind. Die Querbohrungen 50 kreuzen eine axiale Sackbohrung 52 des Kolbens 18 am Grund der Sackbohrung 52. Die Sackbohrung 52 mündet unter Bildung eines konischen Ventilsitzes 54 an einem den Verdrängungsraum 34 begrenzenden Stirnende des Kolbens 18.

Der am Kolben 18 ausgebildete Ventilsitz 54 ist Teil eines als federbelastetes Rückschlagventil ausgebildeten Einlaßventils 56 der Kolbenpumpe: Eine Ventilkugel 58 als Ventilschließkörper des Einlaßventils 56 wird von einer Schraubendruckfeder als Ventilschließfeder 60 gegen den Ventilsitz 54 gedrückt. Die Ventilschließfeder 60 und die Ventilkugel 58 sind in einem napfförmigen Ventilkäfig 62 aufgenommen, der als Tiefziehlteil aus Blech hergestellt ist. Die Ventilschließfeder 60 stützt sich gegen einen Boden 64 des Ventilkäfigs 62 ab. Im Umfang und im Boden 64 des Ventilkäfigs 62 sind Durchströmöffnungen 66 angebracht. Der Ventilkäfig 62 ist mit einer ringstufenförmigen Erweiterung 66 an seinem offenen Ende an dem dem Verdrängungsraum 34 zugewandten Ende des Kolbens 18 angebracht. Ein freier Rand des Ventilkäfigs 62 ist radial nach außen abstehend zu einem Federteller 70 umgeformt. Die Kolbenrückstellfeder 20 drückt gegen den Federteller 70 und über diesen den Kolben 18 in Anlage an den Umfang des Exzenters 22. Zugleich hält die Kolbenrückstellfeder 20 den Ventilkäfig 62 über dessen Federteller 70 am Kolben 18. Die Kolbenrückstellfeder 20 ist erheblich stärker ausgebildet als die Ventilschließfeder 60 des Einlaßventils 56, so daß die Kolbenrückstellfeder 20 den Ventilkäfig 62 gegen die Kraft der Ventilschließfeder 60 bei allen beim Betrieb der Kolbenpumpe auftretenden Belastungen sicher an dem dem Verdrängungsraum 34 zugewandten Ende des Kolbens 18 hält.

Ein Fluidauslaß aus dem Verdrängungsraum 34 der Kolbenpumpe erfolgt durch ein Mittelloch 72 im Laufbuchsenboden 16. An einem dem Verdrängungsraum 34 abgewandten Ende, also auf der Außenseite des Laufbuchsenbodens 16, ist ein Ventilsitz 74 eines Auslaßventils 78 der Kolbenpumpe ausgebildet. Der Ventilsitz: 74 ist an einem ein Ventilsitzteil 76 bildenden Ring ausgebildet, der das Mittelloch 72 konzentrisch umschließend mit dem den Laufbuchsenboden 16 bildenden Kunststoff umspritzt ist. Eine innere, umlaufende Kante des Ventilsitzteils 76 ist gerundet als Ventilsitz 74 ausgebildet.

Ein Auslaßventil 78 ist als federbelastetes Rückschlagventil ausgebildet. Das Auslaßventil 78 weist eine Ventilkugel 80 als Ventilschließkörper auf, die von einer Schraubendruckfeder als Ventilschließfeder 82 gegen den Ventilsitz 74 gedrückt wird. Ventilschließfeder 82 und Ventilkugel 80 sind in einem erweiterten Abschnitt 84 des Mittellochs 72 aufgenommen.

Der erweiterte Abschnitt 84 des Mittellochs 72 befindet sich in einem zapfenartigen Fortsatz 86, der einstückig mit der Laufbuchse 14 ist und von der Außenseite des Laufbuchsenbodens 16 absteht. Der zapfenartige Fortsatz 86 ragt mit Untermaß in eine Ansenkung 88 eines zylindrischen Verschlußteils 90 hinein, wobei sich die Ventilschließfeder 82 des Auslaßventils 78 am Grund der Ansenkung 88 abstützt. Das Verschlußteil 90 ist in ein dem Exzenter 22 abgewandtes Ende der Pumpenbohrung 12 eingesetst und durch eine umlaufende Verstemmung 92 des Pumpengehäuses 10 in der Pumpenbohrung 12 gehalten. Die Verstemmung 92 bewirkt eine druckfeste Abdichtung der Pumpenbohrung 12 auf ihrer dem Exzenter 22 abgewandten Seite. Ein Fluidauslaß erfolgt aus dem erweiterten Abschnitt 84 des Mittellochs 72 durch ein Radialloch 94 im zapfenartigen Fortsatz 86 und von dort weiter durch eine Radialnut 96 im Verschlußteil 90 in einen Ringkanal 98, der den Laufbuchsenboden 16 umschließend zwischen diesem und dem Pumpengehäuse 10 eingeschlossen ist. Aus dem Ringkanal 98 strömt von der Kolbenpumpe gefördertes Fluid durch eine radiale Auslaßbohrung 100 im Pumpengehäuse 10 ab.

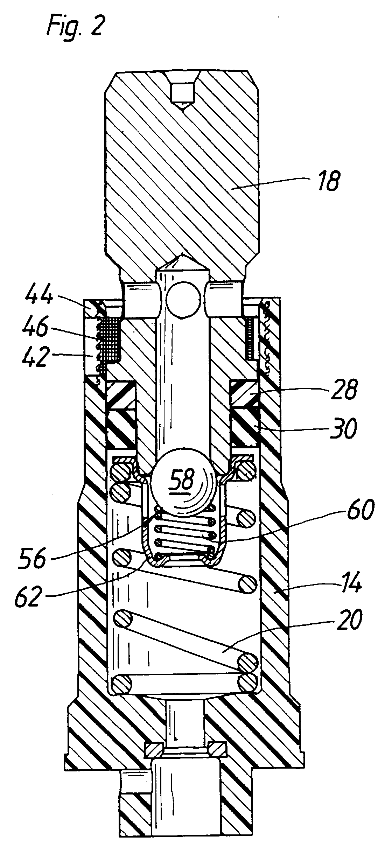

Zur Montage der Kolbenpumpe wird zunächst die Kolbenrückstellfeder 20 in die Laufbuchse 14 eingesetzt und anschließend der Kolben 18, auf den der Führungsring 28 und der Dichtring 30 aufgeschoben und an dem der Ventilkäfig 62 mit der Ventilschließfeder 60 und der Ventilkugel 58 angebracht sind wird in die Laufbuchse 14 eingeführt, wie es in Figur 2 dargestellt ist. Auf diese Weise wird eine im wesentlichen den Kolben 18 mit dem Führungsring 28 und dem Dichtring 30, das Einlaßventil 56 und die Kolbenrückstellfeder 20 umfassende Vormontagebaugruppe der Kolbenpumpe erhalten. In der in Figur 2 dargestellten Stellung des Kolbens 18 in der Laufbuchse 14 ist die Kolbenrückstellfeder 20 vollständig entspannt. Der Kolben 18 ist bei vollständig entspannter Kolbenrückstellfeder 20 in der Laufbuchse 14 bzw. in deren Filterstegen 42 und/oder in deren Abschlußring 44 geführt, d. h. die Kolbenrückstellfeder 20 drückt den Kolben 18 nicht aus der Laufbuchse 14 heraus, solange die Vormontagebaugruppe noch nicht das Pumpengehäuse 10 eingesetzt ist, in dem Exzenter 22 den Kolben 18 gegen die Kraft der Kolbenrückstellfeder 20 in der Laufbuchse 14 hält. Da also die Filterstege 42 und/oder der Abschlußring 44 des Filters 42, 44, 46, die einstückig mit der Laufbuchse 14 sind, den Kolben 18 in der Laufbuchse 14 führen läßt sich die Laufbuchse 14 einschließlich ihres Filters 42, 44, 46 in axialer Richtung kurzbauend ausbilden. Es wird eine bis zum Einsetzen in die Pumpenbohrung 12 gut handhabbare Vormontagebaugruppe erhalten. Nach dem Zusammenbau der Vormontagebaugruppe wird diese in die Pumpenbohrung 12 des Pumpengehäuses 10 eingesetzt und die Pumpenbohrung 12 mit dem Verschlußteil 90 durch Anbringen der Verstemmung 92 verschlossen.

## Patentansprüche

1. Kolbenpumpe für eine hydraulische Kraftfahrzeugbremsanlage, mit einem Pumpengehäuse, in dem ein zu einer axial hin- und hergehenden Hubbewegung antreibbarer Kolben axial verschieblich aufgenommen ist, **dadurch gekennzeichnet,** daß ein den Kolben (18) axial führendes Teil (14) ein Kunststoffteil ist.

2. Kolbenpumpe nach Anspruch 1, **dadurch gekennzeichnet,** daß die Kolbenpumpe eine Laufbuchse (14) aus Kunststoff aufweist, die in das Pumpengehäuse (10) eingesetzt ist und die den Kolben (18) axialverschieblich führt.

3. Kolbenpumpe nach Anspruch 1 oder 2, **dadurch gekennzeichnet,** daß der Kunststoff des den Kolben (18) axial führenden Teils (14) Anteile von Teflon aufweist.

4. Kolbenpumpe nach einem der Ansprüche 1 bis 3, **dadurch gekennzeichnet,** daß der Kunststoff des den Kolben (18) axial führenden Teils (14) Zusätze von Kohlefasern aufweist.

5. Kolbenpumpe nach Anspruch 2, **dadurch gekennzeichnet,** daß die Laufbuchse (14) ein mit ihr einstückiges Filter (42, 44, 46) aufweist.

6. Kolbenpumpe nach Anspruch 2, **dadurch gekennzeichnet,** daß die Laufbuchse (14) einen Laufbuchsenboden (16) aufweist, und daß der Laufbuchsenboden (16) einen Ventilsitz (74) eines Ein- oder Auslaßventils (78) der Kolbenpumpe aufweist.

7. Kolbenpumpe nach Anspruch 2 oder 6, **dadurch gekennzeichnet,** daß die Laufbuchse (14) ein Ventilsitzteil (76) aufweist.

8. Kolbenpumpe nach Anspruch 7, **dadurch gekennzeichnet,** daß das Ventilsitzteil (76) einstückig mit der Laufbuchse (14) ist.

9. Kolbenpumpe nach Anspruch 6, **dadurch gekennzeichnet,** daß das Filter (42, 44, 46) am Umfang der Laufbuchse (14) angeordnet ist, und daß die Laufbuchse (14) eine in axialer Richtung begrenzte Verjüngung ihres Außenumfangs im Bereich des Filters (42, 44, 46) aufweist, die zusammen mit dem Pumpengehäuse (10) einen Ringkanal (38) bildet, welcher die Laufbuchse (14) umgibt und welcher Teil eines Pumpenein- oder -auslasses ist.

10. Kolbenpumpe nach einem der Ansprüche 1 bis 4, **dadurch gekennzeichnet,** daß das den Kolben (18) führenden Kunststoffteil ein Spritzgießteil ist.
